# EUROPEAN PATENT SPECIFICATION

(11) **EP 3 675 405 B1**
(45) Date of publication and mention of the grant of the patent: **05.11.2025**
(21) Application number: 18849253.2
(22) Date of filing: 24.08.2018
(51) Int. Cl.: H04W 88/08, H04W 76/10

(54) **USER PLANE MODE SELECTION METHOD, ADJUSTMENT METHOD, DEVICE, EQUIPMENT AND MEDIUM**
VERFAHREN ZUR AUSWAHL DES MODUS DER BENUTZEREBENE, EINSTELLVERFAHREN, VORRICHTUNG, AUSRÜSTUNG UND MEDIUM
PROCÉDÉ DE SÉLECTION DE MODE DE PLAN UTILISATEUR, PROCÉDÉ DE RÉGLAGE, DISPOSITIF, ÉQUIPEMENT ET SUPPORT

(30) Priority: 25.08.2017 CN 201710753029
(43) Date of publication of application: 01.07.2020
(73) Proprietor: ZTE Corporation, Shenzhen, Guangdong 518057 (CN)
(72) Inventor: ZHENG, Tao, Shenzhen City Guangdong 518057 (CN)
(74) Representative: Iannone, Carlo Luigi
(86) International application number: PCT/CN2018/102248
(87) International publication number: WO 2019/037779

(56) References cited:
- EP-A1- 3 110 226
- CN-A- 105 917 599
- CN-A- 106 538 037
- CN-A- 106 538 037
- CN-A- 106 921 996
- US-A1- 2019 223 251
- "Study on new radio access technology: Radio access architecture and interfaces (Release 14)", 3GPP STANDARD ; TECHNICAL REPORT ; 3GPP TR 38.801, vol. RAN WG3, no. V14.0.0, 3 April 2017 (2017-04-03), pages 1 - 91, XP051298041

## Description

### TECHNICAL FIELD

The present invention relates to the field of communication, for example, to a method for selecting a user-plane mode and a centralized unit device.

### BACKGROUND

With the development of mobile communication technology, the demands of users are various and varied, and the future user experience is the interleaving and merging of multiple terminals, multiple applications and high bandwidth. It is expected that future supported devices will be 10 to 100 times those at present in both number and traffic rate, while the end-to-end latency required for some low latency and ultra-reliable services will be shortened to one-fifth of that in current. Therefore, the development of network requires higher bandwidth, lower latency, higher reliability and stronger intelligent capability, while the related radio communication technology is difficult to meet the requirements of comprehensive promotion of future services.

According to the aspect of the radio access network architecture, the architecture of a distributed unit (DU), and a centralized unit (CU) is an advanced architecture solution, which performs function division on the conventional RAN side radio protocol stack to meet the increasing function requirements of the radio access network.

In the era of the 5th generation (5G), network, the architecture of the network is also more complex and flexible, many application layer services can be deployed on the RAN side, and due to the different positions of the application servers in the RAN, the services provided by the application servers are transmitted in the RAN, and there is a problem how to configure the user-plane protocol stack (i.e., the user-plane protocol layers) in the centralized unit and the distributed unit in the RAN in the transmission path. In the RAN, it is a problem to be solved how to select a suitable user-plane division mode between the centralized unit and the distributed unit for each traffic to be transmitted to meet the traffic requirement. Further relevant technologies are also known from "3rd Generation Partnership Project; Technical Specification Group Radio Access Network; Study on new radio access technology: Radio access architecture and interfaces (Release 14)", 3GPP STANDARD; TECHNICAL REPORT; 3GPP TR 38.801, vol. RAN WG3, no. V14.0.0, 3 April 2017, pages 1-91, XP051298041, and CN 106 538 037 A which relates to a radio bearer configuration method belonging to the field of wireless communication technology.

### SUMMARY

**The invention is set out in the appended set of claims.**

### BRIEF DESCRIPTION OF DRAWINGS

FIG. 1 is a schematic diagram of a CU/DU architecture in the RAN according to the related art;
FIG. 2 is a schematic diagram of eight user-plane protocol-layer division modes between a centralized unit and a distributed unit;
FIG. 3 is a flowchart of a method for selecting a user-plane mode according to embodiment one of the present invention;
FIG. 4 is a block diagram of an apparatus for selecting a user-plane mode according to embodiment one of the present invention;
FIG. 5 is a signaling flowchart of an example according to embodiment one of the present invention;
FIG. 6 is a flowchart of a method for selecting a user-plane mode;
FIG. 7 is a signaling flowchart of an example;
FIG. 8 is a flowchart of a method for selecting a user-plane mode on a core network side according to embodiment three of the present invention;
FIG. 9 is a flowchart of a method for selecting a user-plane mode on a CU side;
FIG. 10 is a signaling flowchart of an example;
FIG. 11 is a flowchart of a method for adjusting a user-plane mode;
FIG. 12 is a flowchart of an apparatus for adjusting a user-plane mode;
FIG. 13 is a signaling flowchart of an example; and
FIG. 14 is a flowchart of a method for selecting a user-plane mode.

### DETAILED DESCRIPTION

The architecture of a distributed unit and a centralized unit in the radio access network is convenient for realizing centralized control under dense networking and improving the cooperation gain and the deployment flexibility among cells. In this architecture, the centralized unit handles the RAN higher-layer protocol stack functions, and the distributed unit handles the RAN lower-layer protocol stack functions. The centralized unit is a central control node, and is responsible for coordinating a plurality of radio technologies in a radio communication network and for mobility management of a terminal (also referred to as user equipment (UE), which is an advantageous solution.

According to the CU/DU architecture, in the RAN, the control-plane protocol layer includes a radio resource control (RRC) layer, which may be completely moved up to the centralized unit; and the user-plane protocol layer includes a packet data convergence protocol (PDCP) layer, a radio link control (RLC) layer, a media access control (MAC) layer, and a physical layer, which may be partially or completely deployed in the centralized unit or the distributed unit according to the requirement of the function. That is, the user-plane protocol layers are divided in the CU/DU architecture, their locations are flexible, and they are not necessarily all located on one network element. This is the part of the CU/DU architecture different from the RAN architecture in the third generation (3G) network and the RAN architecture in the fourth Generation (4G) network.

For example, the PDCP layer, the RLC layer and the MAC layer are all located in the DU, and data of the UE between the core network and the RAN is directly transmitted between the distributed unit and the core network without going through the centralized unit; alternatively, the PDCP layer is deployed on the centralized unit, and the RLC layer and the MAC layer are deployed on the distributed unit; and alternatively, the PDCP layer and the RLC layer are deployed on the centralized unit, and the MAC layer is deployed in the distributed unit.

A plurality of the user-plane protocol-layer division modes exists at present. In the RAN architecture of 3G, the PDCP layer, the RLC layer and the high MAC (H-MAC) layer, of the user-plane protocol layer are all located in the RNC similar to the centralized unit, and thus the location is fixed, and flexibility is lack, which is obviously not suitable for many traffics. In the RAN of 4G, all user-plane protocol layers are located in an E-UTRAN NodeB (eNB), and the entire network of 4G tends to be flattened, thereby reducing intermediate network elements, and reducing the latency of traffic access and the latency of traffic process, but not meeting the complicated traffic configuration expected by 5G and the mobility requirement of the terminal.

### Embodiment one

This embodiment provides a solution for selecting a user-plane mode under the CU/DU architecture in the RAN for the point-to-multipoint traffic (that is, broadcast or multicast traffic, also referred to as broadcast/multicast traffic).

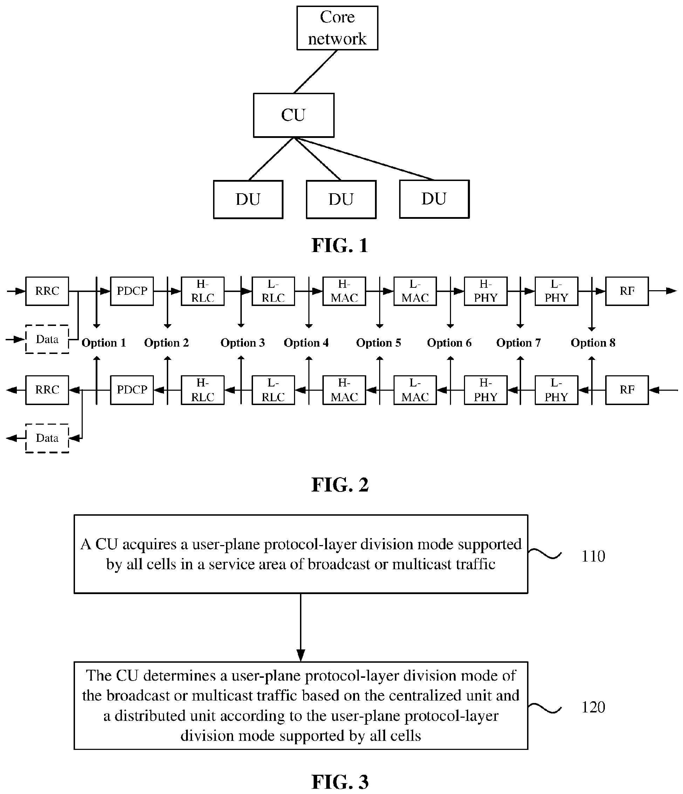

FIG. 1 is a schematic diagram of a CU/DU architecture in the RAN of 5G according to the related art. The architecture includes a core network (CN), a CU and a DU. Transmission of signaling and data between the CN and the CU is performed through an interface between the CN and the CU, and transmission of signaling and data between the CU and the DU is performed through an interface between the CU and the DU.

FIG. 2 is a schematic diagram of eight user-plane protocol-layer division modes, also referred to as eight user-plane modes, between the CU and the DU. The protocol layers in the figure include the protocols layers described below.

The RRC layer is a radio resource control protocol layer of the air interface.

The PDCP layer is a data convergence protocol layer.

The high RLC (H-RLC) layer and the low RLC (L-RLC) layer are obtained through the division of the RLC protocol layer. There are two division methods. In the first method, the H-RLC includes the automatic repeat request (ARQ) function and a flushing sequencing function, and the L-RLC includes the rest RLC function. In the second method, the H-RLC includes the RLC receiving end function, and the L-RLC includes the RLC sending end function.

The high MAC (H-MAC) layer and the low MAC (L-MAC) layer are obtained through the division of the MAC protocol layer. The H-MAC includes the central scheduling function of the MAC, and the L-MAC includes the MAC layer function with strict time requirements.

The high PHY (H-PHT) layer and the low PHY (L-PHY) layer are obtained through the division of the physics (PHY) layer.

The radio frequency (RF) function is also included in the figure.

Except the RRC layer, the protocol layers above are all user-plane protocol layers.

The protocol layers are divided in different modes, and eight division modes (may also referred to as distribution modes) are obtained, namely options 1 to 8. On the left side of the arrow corresponding to each mode is the protocol layer deployed on the CU in this mode, and on the right side of the arrow is the protocol layer deployed on the DU in this mode.

In option 1, the protocol layers of the UE user plane are all in the DU, and data is directly transmitted from the DU to the CN without going through the CU.

In option 2, the PDCP layer of the UE user plane is in the CU, and the RLC layer and the lower layers of the UE user plane are all in the DU.

In option 3, the PDCP layer and the H-RLC layer of the UE user plane are in the CU, and the L-RLC layer, the MAC layer and the lower layers of the UE user plane are all in the DU.

In option 4, the PDCP layer and the RLC layer of the UE user plane are in the CU, and the MAC layer and the lower layers of the UE user plane are all in the DU.

In option 5, the PDCP layer, the RLC layer and the H-MAC layer of the UE user plane are in the CU, and the L-MAC layer and the lower layers of the UE user plane are all in the DU.

In option 6, the PDCP layer, the RLC layer and the MAC layer of the UE user plane are all in the CU, and the PHY layer and the RF layer of the UE user plane are in the DU.

In option 7, the L-PHY layer and RF layer of the UE user plane are in the DU, and the rest layers of the UE user plane are all in CU.

In option 8, the RF layer of the UE user plane is in the DU, and the rest layers of the UE user plane are all in CU.

The CU/DU architecture above and the user-plane protocol-layer division modes are available to all embodiments in the present application.

The process of a method for selecting a user-plane mode according to this embodiment is shown in FIG. 3, and includes the steps described below.

In step 110, a CU acquires a user-plane protocol-layer division mode supported by all cells in a service area of broadcast or multicast traffic;

In this embodiment, after receiving a request message for establishing the broadcast or multicast traffic and sent by a core network element, the CU acquires the user-plane protocol-layer division mode supported by all cells in the service area of the broadcast or multicast traffic. The CU obtains the user-plane protocol-layer division mode supported by the cell from the configuration information, or by querying other network elements storing the information.

In step 120, the CU determines a user-plane protocol-layer division mode of the broadcast or multicast traffic based on the CU and a DU according to the user-plane protocol-layer division mode supported by all cells.

The step in which the CU determines the user-plane protocol-layer division mode of the broadcast or multicast traffic based on the CU and the DU according to the user-plane protocol-layer division mode supported by all cells includes that the CU determines a user-plane protocol-layer division mode supported by all cells to be the user-plane protocol-layer division mode of the broadcast or multicast traffic based on the CU and the DU.

In this embodiment, the step in which the CU determines the user-plane protocol-layer division mode of the broadcast or multicast traffic based on the CU and the DU according to the user-plane protocol-layer division mode supported by all cells includes that when a plurality of user-plane protocol-layer division modes supported by all cells are available, the CU selects one user-plane protocol-layer division mode with a largest number of user-plane protocol layers on the DU from the plurality of user-plane protocol-layer division modes, and determines the user-plane protocol-layer division mode with the largest number of user-plane protocol layers on the distributed unit to be the user-plane protocol-layer division mode of the broadcast or multicast traffic based on the centralized unit and the distributed unit. The number of user-plane protocol layers deployed on the DU is large, which helps lower the latency of data transmission.

In this embodiment, after the step in which the CU determines a user-plane protocol-layer division mode supported by all cells to be the user-plane protocol-layer division mode of the broadcast or multicast traffic based on the CU and the DU , the method further includes that the CU establishes, according to the determined user-plane protocol-layer division mode of the broadcast or multicast traffic, a user-plane protocol-layer entity deployed on the CU , and notifies the DU to establish a user-plane protocol-layer entity deployed on the DU.

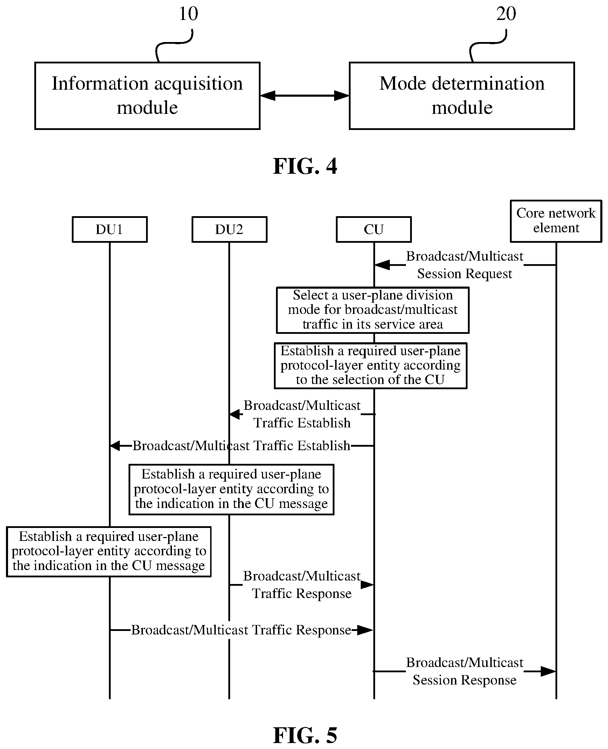

This embodiment further provides an apparatus for selecting a user-plane mode. As shown in FIG. 4, the apparatus includes an information acquisition module 10 and a mode determination module 20.

The information acquisition module 10 is configured to acquire a user-plane protocol-layer division mode supported by all cells in a service area of broadcast or multicast traffic.

The mode determination module 20 is configured to determine a user-plane protocol-layer division mode of the broadcast or multicast traffic based on a CU and a DU according to the user-plane protocol-layer division mode supported by all cells.

In this embodiment, the apparatus for selecting the user-plane mode is provided in the CU, the information acquisition module 10 and the mode determination module 20 may be implemented by software and/or hardware in the device where the CU is located, for example, by a processor running corresponding software. This is also the case with other embodiments.

In this embodiment, the mode determination module 20 is configured to determine a user-plane protocol-layer division mode supported by all cells to be the user-plane protocol-layer division mode of the broadcast or multicast traffic based on the CU and the DU.

In this embodiment, the mode determination module 20 is further configured such that when a plurality of user-plane protocol-layer division modes supported by all cells are available, the CU selects one user-plane protocol-layer division mode with a largest number of user-plane protocol layers on the DU from the plurality of user-plane protocol-layer division modes and determines the user-plane protocol-layer division mode with the largest number of user-plane protocol layers on the DU to be the user-plane protocol-layer division mode of the broadcast or multicast traffic based on the CU and the DU.

In this embodiment, the information acquisition module 10 is configured such that after receiving a request message for establishing the broadcast or multicast traffic and sent by a core network element to establish the broadcast or multicast traffic, the CU acquires the user plane protocol layer division mode supported by all cells in the service area of the broadcast or multicast traffic.

In this embodiment, the apparatus may further include: an entity establishing module configured to establish, according to the determined user-plane protocol-layer division mode of the broadcast or multicast traffic, a user-plane protocol-layer entity deployed on the CU, and to notify the DU to establish a user-plane protocol-layer entity deployed on the DU.

This embodiment further provides a CU device. The device includes a memory, a processor, and a computer program stored in the memory and executable on the processor. When executing the computer program, the processor performs the method in this embodiment.

This embodiment further provides a computer-readable storage medium storing a computer-executable program. When executed by a processor, the program causes the processor to perform the method in this embodiment.

The solution in the foregoing embodiment is based on the radio access network with the CU/DU architecture. In this solution, a suitable user-plane protocol-layer division mode can be dynamically selected according to the traffic, so that the user-plane protocol layers are reasonably distributed in the CU and the DU. Compared with the related technology that adopts a fixed user-plane protocol-layer division mode, this solution can better satisfy the requirements of the traffic, such as the requirements for quality of service (QoS), and the requirements for latency, bandwidth and load in a radio communication network.

The following description will be made with reference to another example.

This example relates to the establishment of a user-plane protocol-layer entity for broadcast/multicast traffic within a RAN, the process of which is shown in FIG. 5.

In step 1, a core network element (CN) sends a Broadcast/Multicast Session Request to a CU to indicate broadcast/multicast traffic required to be established.

In step 2, the CU determines, according to the service area of the broadcast/multicast traffic, the cell where the broadcast/multicast traffic is played, and then selects a user-plane protocol-layer division mode based on CU/DU for the broadcast/multicast traffic according to the configuration information about the user-plane protocol layers supported by all cells in the service area.

In an embodiment, a user-plane division mode is selected for the broadcast/multicast traffic within the service area of the broadcast/multicast traffic.

Selection of the user-plane protocol-layer division mode is equivalent to determination of the distribution position of each user protocol layer entity, that is, determination of which should be deployed on the DU and which should be deployed on the CU. A plurality of DUs may be configured to transmit broadcast/multicast traffic data under one CU. In this example, it is assumed that DU 1 and DU 2 are configured to transmit broadcast/multicast traffic data under one CU.

In this step, one user-plane protocol-layer division mode is selected from the user-plane protocol-layer division mode supported by all cells within the service area, so that the distribution position of the user-plane protocol-layer entity serving the service is determined. If a plurality of division modes supported by the all cells are available, the priorities are from option 1, option 2, option 3 ... to option 8, which are from high to low. That is, the user-plane protocol-layer division mode with the largest number of user-plane protocol layers on the DU is preferably selected.

In step 3, the CU firstly establishes the user-plane protocol-layer entity deployed on the CU in the CU for the broadcast/multicast traffic.

In an example, the division mode selected by the CU is option 2, and only the PDCP layer entity needs to be established on the CU for the broadcast/multicast traffic.

In another example, the division mode selected by the CU is option 4, and the PDCP layer entity and the RLC layer entity need to be established on the CU for the broadcast/multicast traffic.

In an embodiment, the required user-plane protocol-layer entity is established according to the selection of the CU.

In step 4, the CU sends a Broadcast/Multicast Traffic Establish message to the DU 2. The message specifies the user-plane protocol-layer entity to be established for the broadcast/multicast traffic.

In an example, the division mode selected by the CU is option 2, and the user-plane-protocol-layer entities that need to be established on the DU 2 for the broadcast/multicast traffic include the RLC layer, the MAC layer and the lower-protocol-layer entities.

In another example, the division mode selected by the CU is mode 4, and the user-plane-protocol-layer entities that need to be established on the DU 2 for the broadcast/multicast traffic include the MAC layer and the lower-protocol-layer entities.

In step 5, the CU sends the Broadcast/Multicast Traffic Establish message to the DU 1. The message specifies the user-plane protocol-layer entity that needs to be established for the Broadcast/Multicast Traffic.

In this example, the user-plane protocol-layer entity that needs to be established on the DU 1 is the same as the user-plane protocol-layer entity that needs to be established on the DU 2.

In step 6, the DU 2 establishes the corresponding user-plane protocol-layer entity for the broadcast/multicast traffic.

In an embodiment, the required user-plane protocol-layer entity is established according to the indication in the Broadcast/Multicast Traffic Establish message sent by the CU.

In step 7, the DU 1 establishes the corresponding user-plane protocol-layer entity for the broadcast/multicast traffic.

In an embodiment, the required user-plane protocol-layer entity is established according to the indication in the Broadcast/Multicast Traffic Establish message sent by the CU.

In step 8, the DU 2 sends a Broadcast/Multicast Traffic Response message to the CU, indicating that the broadcast/multicast traffic has been established.

In step 9, the DU 1 sends a Broadcast/Multicast Traffic Response message to the CU, indicating that the broadcast/multicast traffic has been established.

In step 10, the CU sends a Broadcast/Multicast Traffic Response message to the CU, indicating that the broadcast/multicast traffic has been established.

Interaction between the CU and the DU 1 and interaction between the CU and the DU 2 may be parallel and are not limited by the sequence in the preceding process.

The user-plane protocol-stack entity for the point-to-multipoint traffic can be flexibly configured and deployed in the CU and the DU. The user-plane protocol-stack entity in the CU for the point-to-multipoint traffic sends data to the user-plane protocol-stack entities in a plurality of DUs.

The embodiments presented below are not part of the claimed invention.

### Embodiment two

This embodiment provides a solution for selecting a user-plane mode under the CU/DU architecture in the RAN for the point-to-point traffic.

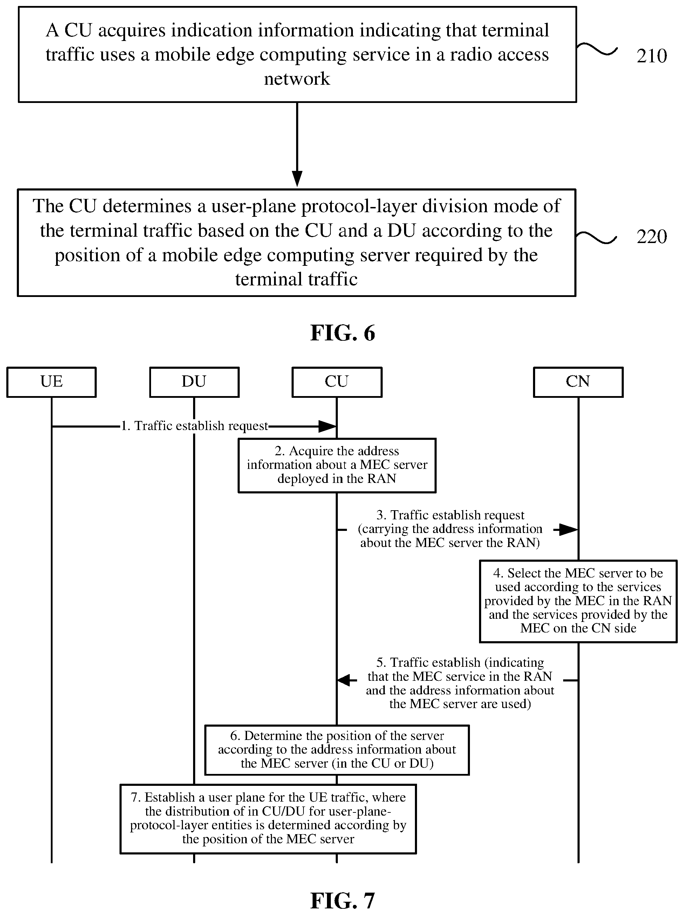

The process of a method for selecting a user-plane mode according to this embodiment is shown in FIG. 6, and includes the steps described below.

In step 210, the CU acquires indication information indicating that terminal traffic uses a mobile edge computing service in a radio access network.

In this step, the CU receives a traffic establish message sent by a core network element, and acquires, from the traffic establish message, the indication information indicating that the terminal traffic uses the mobile edge computing (MEC) service in the radio access network. The traffic establish message may be any message related to traffic establishment. The foregoing indication information may be a newly added information unit in the message or an extension to an existing information unit in the message.

In step 220, the CU determines a user-plane protocol-layer division mode of the terminal traffic based on the CU and the DU according to the position of a mobile edge computing server required by the terminal traffic.

In this embodiment, if the MEC server is deployed on the CU side, the CU selects one user-plane protocol-layer division mode from a plurality of user-plane protocol-layer division modes in which a first part of the user-plane protocol layers are located on the DU and a second part of the user-plane protocol layers are located on the CU, and determines this selected mode to be the user-plane protocol-layer division mode based on the CU and the DU for the UE traffic; and if the MEC server is deployed on the DU side, the CU selects a user-plane protocol-layer division mode in which all user-plane protocol layers are located on the DU, and determines this selected mode to be the user-plane protocol-layer division mode based on the CU and the DU for the UE traffic.

In this embodiment, before the CU receives the traffic establish message sent by the core network element, the method further includes the steps described below.

The CU sends a traffic establish request message to the core network element, so that the core network element searches, according to the traffic establish request message, for the service provided by the mobile edge computing server in the radio access network and sends the traffic establish message to the centralized unit under the condition that the service meets the requirement of the terminal traffic.

The traffic establish request message carries identification information about the MEC server in the RAN and the traffic information about the UE traffic; and the traffic establish message carries the indication information indicating that the MEC server in the RAN is used.

This embodiment further provides an apparatus for selecting a user-plane mode. As shown in FIG. 4, the apparatus includes an information acquisition module 10 and a mode determination module 20.

The information acquisition module 10 is configured to acquire indication information indicating that terminal traffic uses a mobile edge computing service in a radio access network.

The mode determination module 20 is configured to determine, after the information acquisition module acquires the indication information, the user-plane protocol-layer division mode based on a CU and a DU for the terminal traffic according to the position of the mobile edge computing server required by the terminal traffic.

In this embodiment, the mode determination module 20 is configured in the manners described below.If the mobile edge computing server is deployed on a CU side, the mode determination module 20 selects one user-plane protocol-layer division mode from a plurality of user-plane protocol-layer division modes in which a first part of the user plane protocol layers are located on the DU and a second part of the user plane protocol layers are located on the CU, and determines the one user plane protocol layer division mode to be the user-plane protocol-layer division mode based on the CU and the DU for the terminal traffic.

If the mobile edge computing server is deployed on a DU side, the mode determination module 20 selects a user-plane protocol-layer division mode in which all user-plane protocol layers are located on the DU, and determines this user-plane protocol-layer division mode to be the user-plane protocol-layer division mode based on the CU and the DU for the terminal traffic.

In this embodiment, the information acquisition module 10 is configured to receive a traffic establish message sent by a core network element, and acquires, from the traffic establishment message, indication information indicating that the terminal traffic uses the mobile edge computing service in the radio access network.

This embodiment further provides a CU device. The device includes a memory, a processor, and a computer program stored in the memory and executable on the processor. When executing the computer program, the processor performs the method according to this embodiment.

This embodiment further provides a computer-readable storage medium storing a computer-executable program. When executed by a processor, the program causes the processor to perform the method in this embodiment.

The solution in the foregoing embodiment is based on the radio access network with the CU/DU architecture. In this solution, a suitable user-plane protocol-layer division mode can be dynamically selected according to the traffic, so that the user-plane protocol layers are reasonably distributed in the CU and the DU. Compared with the related technology that adopts a fixed user-plane protocol-layer division mode, this solution can better satisfy the requirements of the traffic, such as the requirements for quality of service (QoS), and the requirements for latency, bandwidth and load in a radio communication network.

The following description will be made with reference to another example.

In this example, when the MEC server is located on the RAN side, the process of establishing the user-plane protocol-layer entity for the UE traffic is as shown in FIG. 7.

In step 1, the CU receives a traffic establish request message initiated by the UE. The message carries the traffic information.

In step 2, the CU acquires the address information about the MEC server deployed in the RAN.

The address information about the MEC server deployed in the RAN may be configuration information stored in the CU.

In step 3, the CU sends a traffic establish request message of the UE to the CN. The traffic establish request message carries the traffic information about the UE, and the message between the CN and the CU carries the address information about the MEC server in the RAN.

The traffic establish request message (non-access stratum (NAS) message) may be included in the message between the CN and the CU. The message between the CN and the CU may be, for example, an initial UE message of an S1 interface, and the S1 interface is an interface between the 4G ENB and a mobility management entity (MME).

In step 4, the CN confirms, according to the address information about the MEC server in the RAN, the service which can be provided by the MEC server in the RAN, compares this service with the service provided by the MEC server at the local end, and determines, according to a certain principle, that the UE traffic uses the MEC service deployed in the RAN.

The principle here may be as follows: if the MEC server in the RAN can provide the traffic requested by the UE and the MEC server at the local end (referred to as CN) cannot provide the traffic requested by the UE, it is determined that the UE traffic uses the MEC service deployed in the RAN; if the MEC server in the RAN cannot provide the traffic requested by the UE and the MEC server in the CN can provide the traffic requested by the UE, it is determined that the UE traffic uses the MEC service deployed in the CN; and if the MEC servers in the RAN and the CN are both capable of providing the traffic requested by the UE, it is determined that the UE traffic preferably uses the MEC deployed in the RAN (or in the CN). The RAN side is closer to the UE, and can provide a service with lower latency and higher reliability.

In step 5, the CN sends a traffic establish message to the CU. The message carries indication information determined in step 4 to indicate that the MEC service in the RAN is used.

In this step, the traffic establish message may be an initial Context Setup Request message of the S1 interface, or messages of the other interfaces between the CU and the CN.

In step 6, the CU firstly determines, according to the indication of the CN, the position of the MEC server used by the UE traffic, and then establishes the user-plane protocol-layer entity for the UE in the CU and the DU.

If the MEC server is deployed together with the DU, user-plane division mode one is selected, for example, mode one in FIG. 2, where all user-plane protocol-stack entities are located on the DU; if the MEC service is deployed together with the CU, one mode may be selected from option 2, option 3, option 4, option 5, option 6, option 7 and option 8, for example, option 2, option 3, option 4, option 5, option 6, option 7 and option 8 in FIG. 2, and the user-plane protocol-stack entities are deployed in the CU and the DU.

In step 7, the user-plane protocol-layer entities are established in the CU and the DU for the UE according to the selection of the CU.

In the foregoing example, for an application-layer server co-deployed with the RAN, when the RAN sends a traffic establish request of the UE to the core control center, the address information about the application-layer server at the local end is carried. The core control center determines, according to service content provided by the application-layer server, that the application-layer server at the local end of the RAN is used to provide the traffic service, and indicates, in the service establishment message to the RAN, that the RAN-local application-layer service is used. According to the location of the local application-layer server: co-deployed with the CU or co-deployed with the DU, the RAN determines the distribution positions, in the CU and the DU, of the user-plane protocol-stack entities of the UE traffic, so that better traffic QoS is provided for the UE.

### Embodiment three

This embodiment provides a solution for selecting a user-plane mode under the CU/DU architecture in the RAN for the point-to-point traffic.

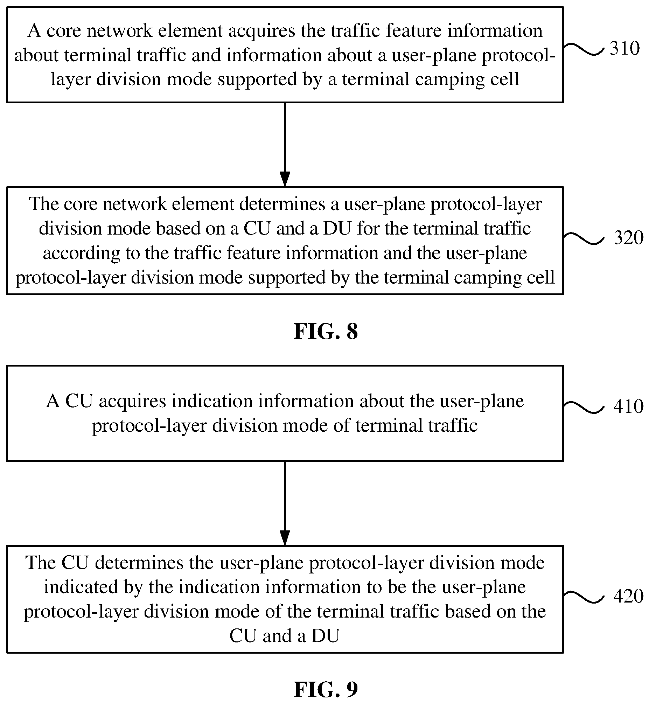

In this embodiment, the user-plane mode selection includes the processing on the CN side and the processing on the CU side, as shown in FIG. 8, where the method for selecting the user-plane mode on the CN side includes the steps described as below.

In step 310, a core network element acquires the traffic feature information about terminal traffic and information about a user-plane protocol-layer division mode supported by a terminal camping cell.

In this embodiment, the step in which the core network element acquires the traffic feature information about the terminal traffic and information about the user-plane protocol-layer division mode supported by the terminal camping cell includes that the core network element receives a traffic request message sent by the CU, and acquires the traffic feature information about the UE traffic and the information about the user-plane protocol-layer division mode supported by the UE camping cell from the traffic request message.

In step 320, the core network element determines a user-plane protocol-layer division mode based on the CU and the DU for the terminal traffic according to the traffic feature information and the user-plane protocol-layer division mode supported by the terminal camping cell.

In this embodiment, according to the traffic feature information, the core network element selects one user-plane protocol-layer division mode from the user-plane protocol-layer division mode supported by the terminal camping cell, and determines the one user-plane protocol-layer division mode to be the user-plane protocol-layer division mode based on the CU and the DU for the UE traffic.

In this embodiment, the step in which the core network element determines the user-plane protocol-layer division mode based on the CU and the DU for the terminal traffic according to the traffic feature information and the user-plane protocol-layer division mode supported by the terminal camping cell includes at least one of the steps described below.

In the case where the traffic feature information includes information about a traffic characteristic, the core network element selects one user-plane protocol-layer division mode corresponding to the traffic characteristic from the user-plane protocol-layer division mode supported by the UE camping cell; and in the case where the traffic feature information includes information about an access point name (APN), the core network element selects one user-plane protocol-layer division mode supported by the APN from the user-plane protocol-layer division mode supported by the UE camping cell.

In this embodiment, after the step in which the core network element determines the user-plane protocol-layer division mode based on the CU and the DU for the UE traffic, the method further includes that the core network element sends a traffic establish message to the CU, where the traffic establish message carries indication information about the determined user-plane protocol-layer division mode of the terminal traffic. The indication information may be a newly added information unit in the message or an extension to an existing information unit in the message.

In this embodiment, the method for selecting a user-plane mode on the CU side is shown in FIG. 9, and includes the steps described below.

In step 410, the CU acquires indication information about the user-plane protocol-layer division mode of the terminal traffic.

In step 420, the CU determines the user-plane protocol-layer division mode indicated by the indication information to be the user-plane protocol-layer division mode of the terminal traffic based on the CU and the DU.

In this embodiment, the step in which the CU acquires the indication information about the user-plane protocol-layer division mode of the terminal traffic includes that the CU receives the traffic establish message sent by the core network element, and acquires the indication information about the user-plane protocol-layer division mode of the terminal traffic from the traffic establish message.

This embodiment further provides an apparatus for selecting a user-plane mode on the CN side. As shown in FIG. 4, the apparatus includes an information acquisition module 10 and a mode determination module 20.

The information acquisition module 10 is configured to acquire traffic feature information about terminal traffic and information about a user-plane protocol-layer division mode supported by a terminal camping cell.

The mode determination module 20 is configured to determine a user-plane protocol-layer division mode based on a CU and a DU for the terminal traffic according to the traffic feature information and the user-plane protocol-layer division mode supported by the terminal camping cell.

In this embodiment, the mode determination module 20 is configured in at least one of the manners described below.

In the case where the traffic feature information includes information about a traffic characteristic, the core network element selects one user-plane protocol-layer division mode corresponding to the traffic characteristic from the user-plane protocol-layer division mode supported by the terminal camping cell; and in the case where the traffic feature information includes information about an access point name (APN), the core network element selects one user-plane protocol-layer division mode supported by the APN from the user-plane protocol-layer division mode supported by the terminal camping cell.

In this embodiment, the information acquisition module 10 is configured such that the core network element receives a traffic request message sent by the centralized unit, and acquires the traffic feature information about the terminal traffic and the information about the user-plane protocol-layer division mode supported by the terminal camping cell from the traffic request message.

In this embodiment, the apparatus further includes a message sending module, which is configured to send a traffic establish message to the CU, where the traffic establish message carries indication information about the determined user-plane protocol-layer division mode of the terminal traffic.

This embodiment further provides an apparatus for selecting a user-plane mode on the CN side. As shown in FIG. 4, the apparatus includes an information acquisition module 10 and a mode determination module 20.

The information acquisition module 10 is configured to acquire, from the message sent by the core network element, indication information about a user-plane protocol-layer division mode of terminal traffic.

The mode determination module 20 is configured to determine a user-plane protocol-layer division mode based on a CU and a DU for the terminal traffic according to the user-plane protocol-layer division mode indicated by the indication information.

This embodiment further provides a core network element. The core network element includes a memory, a processor, and a computer program stored in the memory and executable on the processor. When executing the computer program, the processor performs the method for selecting a user-plane mode on the core network element side according to this embodiment.

This embodiment further provides a CU device. The device includes a memory, a processor, and a computer program stored in the memory and executable on the processor. When executing the computer program, the processor performs the method for selecting a user-plane mode on the CU side according to this embodiment.

This embodiment further provides a computer-readable storage medium storing a computer-executable program. When executed by a processor, the program causes the processor to perform the method in this embodiment.

The solution in the foregoing embodiment is based on the radio access network with the CU/DU architecture and can dynamically select a suitable user-plane-protocol-layers division mode according to the traffic, so that the user-plane protocol layers are reasonably distributed in the CU and the DU. Compared with the related technology that adopts a fixed user-plane-protocol-layers division mode, this solution can better satisfy the requirements of the traffic, such as the requirements for quality of service (QoS), and the requirements for latency, bandwidth and load in a radio communication network.

The following description will be made with reference to another example.

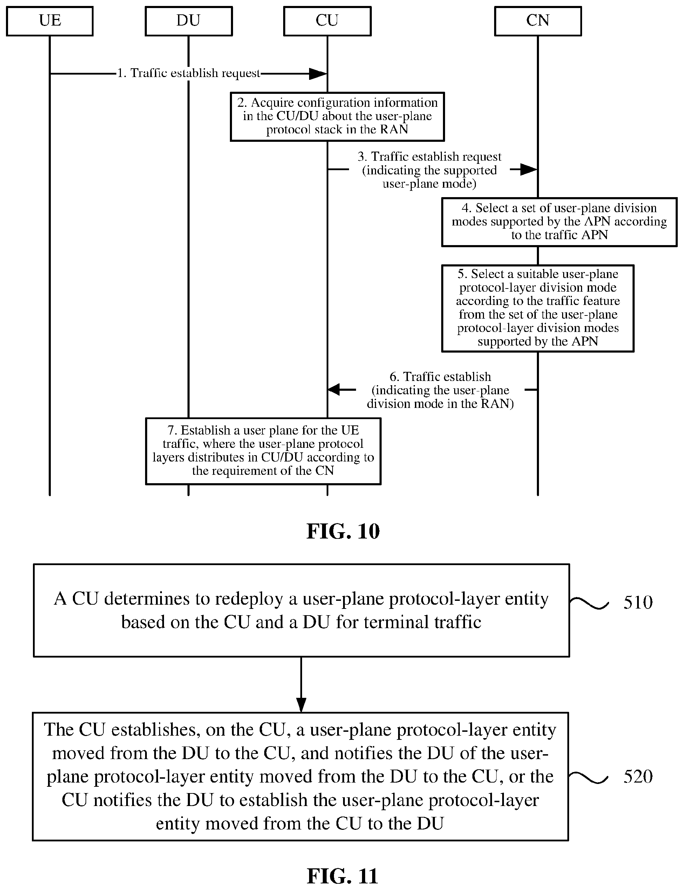

FIG. 10 is a flowchart in which the core network in this example selects a user-plane mode for a UE according to traffic feature information. The selection method includes the steps described below.

In step 1, a CU receives a traffic establish request message initiated by the UE. The message carries traffic feature information, and the traffic feature information includes traffic information and access point name (APN) information.

In step 2, the CU acquires configuration information in the CU/DU about the user-plane protocol stack in the RAN.

In this step, the CU acquires information about a user-plane division mode supported by the UE camping cell. The user-plane division mode supported by the UE camping cell is one, several or all of option 1, option 2, option 3, option 4, option 5, option 6, option 7 and option 8 as shown in FIG. 2.

In step 3, the CU sends the traffic establish request message of the UE to the CN. The message carries the traffic information and the APN information, and the message between the CN and the CU carries the user-plane division mode supported by the UE camping cell.

In this step, the Initial UE Message of the S1 interface may carry the information about the user-plane division mode supported by the UE camping cell.

In step 4, a set of user-plane division modes supported by each APN is preset in the CN; each set includes one, several or all of the eight user-plane protocol-layer division modes; and then the set of user-plane division modes corresponding to the APN is selected according to the APN carried in the message.

In step 5, from the set of user-plane division modes supported by the APN, the CN selects the user-plane division mode in the RAN for the traffic according to the traffic characteristic in the message (video, voice, download, internet protocol version 4 (IPV 4), internet protocol version 6 (IPV 6), etc.) and the user-plane division mode supported by the UE camping cell.

The correspondence between the traffic characteristic and the user-plane protocol-layer division modes may be preset in the CN, and the user-plane protocol-layer division mode corresponding to the traffic characteristic is selected from the user-plane protocol-layer division modes supported by the UE camping cell and the APN. For example, the video traffic requires low latency, so a division mode such as mode one may be selected, so that the user-plane data is directly transmitted from the CN to the DU without going through the CU, and one network element (CU) is omitted on the path, thereby reducing the latency of the entire end-to-end path.

In step 6, the CN sends a traffic establish message to the CU. The message carries the user-plane division mode selected in step 5.

In this step, a message of the interface between the CU and the CN, such as an initial context setup request message of the S1 interface, may be used.

In step 7, the CU establishes a user plane for the UE in the CU and the DU according to the indication of the CN, and the user-plane protocol-layer division mode is indicated by the indication of the CN.

In the foregoing example, the RAN notifies the core control center of the traffic characteristic information about the UE and the user-plane protocol stack configuration information about the RAN; and the core control center selects a suitable distribution mode of the user-plane protocol stack entity in the centralized unit and the DU for the UE according to these information, and performs flexible allocation and combination of all user-plane protocol-stack entities in the CU and the DU.

### Embodiment four

This embodiment provides a solution for adjusting a user-plane mode.

This embodiment provides a method for adjusting a user-plane mode. As shown in FIG. 11, the method includes the steps described below.

In step 510, the CU determines to redeploy the user-plane protocol-layer entity based on the CU and the DU for the terminal traffic.

The redeployment of the user-plane protocol-layer entity based on the CU and the DU for the UE traffic may be triggered by a variety of reasons, for example, the UE needs to change a cell, re-access, change resources in the RAN, or balance loads in the CU in the resident RAN, and due to the reallocation and adjustment of resources in the RAN, or the difference of user-plane protocol-stack entities supported by different DUs, the distribution of the user-plane protocol-layer entity based on the CU and the DU for the UE traffic is determined to be adjusted.

In step 520, the CU establishes, on the CU, a user-plane protocol-layer entity moved from the DU to the CU, and notifies the DU of the user-plane protocol-layer entity moved from the DU to the CU, or the CU notifies the DU to establish the user-plane protocol-layer entity moved from the CU to the DU.

In this embodiment, after the CU or the DU establishes the user-plane protocol-layer entity successfully, the method further includes the steps described below.

The CU notifies the terminal of a new configuration parameter after the redeployment and effective time of the new configuration parameter, and notifies the DU of the effective time of the new configuration parameter after receiving confirmation from the terminal.

When the effective time starts, the DU deletes the user-plane protocol-layer entity moved from the DU to the CU, or the CU deletes the user-plane protocol-layer entity moved from the CU to the DU, so that the DU and the CU use the redeployed user-plane protocol-layer entity to transmit data for the terminal traffic.

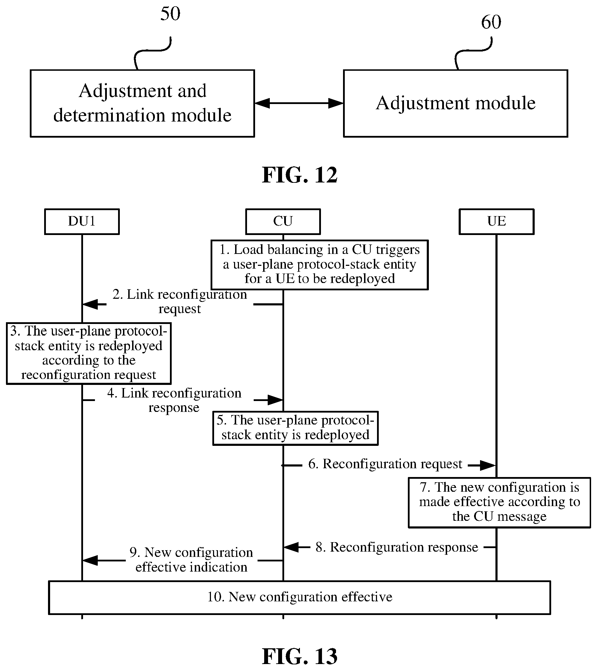

This embodiment further provides an apparatus for adjusting a user-plane mode. As shown in FIG. 12, the apparatus includes an adjustment and determination module 50, and an adjustment module 60.

The adjustment and determination module 50 is configured to determine to redeploy a user-plane protocol-layer entity based on a CU and a DU for terminal traffic.

The adjustment module 60 is configured to: after the adjustment and determination module determines to perform the redeployment, establish, on the CU, a user-plane protocol-layer entity moved from the DU to the CU, and notify the DU of the user-plane protocol-layer entity moved from the DU to the CU, or notify the DU to establish the user-plane protocol-layer entity moved from the CU to the DU.

In this embodiment, the adjustment module is further configured to notify the terminal of a new configuration parameter after the redeployment and effective time of the new configuration parameter, and notify the DU of the effective time of the new configuration parameter after receiving a confirmation from the terminal; and when the effective time starts, the distributed unit deletes the user-plane protocol-layer entity moved from the distributed unit to the centralized unit, or the centralized unit deletes the user-plane protocol-layer entity moved from the centralized unit to the distributed unit, so that the centralized unit and the distributed unit use the redeployed user-plane protocol-layer entity to transmit data for the terminal traffic.

This embodiment further provides a centralized unit device. The device includes a memory, a processor, and a computer program stored in the memory and executable on the processor. When executing the computer program, the processor performs the method according to this embodiment.

This embodiment further provides a computer-readable storage medium storing a computer-executable program. When executed by a processor, the program causes the processor to perform the method in this embodiment.

In the foregoing solution of this embodiment, the user-plane protocol-layer entity between the centralized unit and the distributed unit for the terminal traffic can be redeployed when the situation changes so that better service performance can be provided.

The following description will be made with reference to an example.

In this example, due to load balancing in the CU, the UE user-plane protocol-stack entity is redeployed in the CU and the DU; and as shown in FIG. 13, the method includes the steps described below.

In step 1, the UE camps on DU 1, and the user-plane protocol-stack entities (also referred to as protocol-stack entities) for the UE in DU 1 are entities of the RLC, MAC and lower protocol layers thereof, and the user-plane protocol-layer entity for the UE in the CU is an entity of the PDCP protocol layer, as shown in mode 2 of FIG. 2; and the load balancing in the CU triggers the user-plane protocol-stack entity for the UE to be redeployed in the CU and the DU.

In step 2, the CU sends a link reconfiguration request to the DU 1, and instructs DU 1 to establish a PDCP layer entity for the UE.

The initial user-plane protocol-layer division mode of the traffic is option 2, where the PDCP layer is in the CU, and other layers are in the DU. After reselection, assuming that the division mode of mode 1 is used, the PDCP layer needs to be established in the DU, that is, the PDCP layer in the CU needs to be moved to the DU.

In step 3, the DU 1 establishes, according to the requirement of the CU, a user-plane protocol-stack entity of the PDCP which combines with the initial user-plane protocol-stack entity to form a complete user-plane protocol stack for the UE traffic, establishes a data-processing protocol-layer entity intercommunicating with the core network, and opens a channel for data transmission with the core network.

In step 4, the DU 1 returns a link reconfiguration response to the CU to indicate that the link reconfiguration is successful.

In step 5, the CU establishes a label indicating that the user-plane protocol-stack entity of the PDCP has been established in the DU 1.

In step 6, the CU sends a reconfiguration request to the UE and indicates the new configuration parameter and the effective time.

In step 7, the UE confirms the new configuration according to the message from the CU and confirms the effective time of the new configuration.

In step 8, the UE returns a reconfiguration response to the CU.

And 9, the CU sends a new-configuration-effective indication to the DU 1 to indicate the effective time.

In step 10, the new configuration takes effect, the PDCP entity and the data-processing protocol-layer entity intercommunicating with the core network are deleted in the CU, and the uplink and downlink data in DU 1 are transmitted between the UE and the core network through the PDCP entity and the data-processing protocol-layer entity intercommunicating with the core network.

### Embodiment five

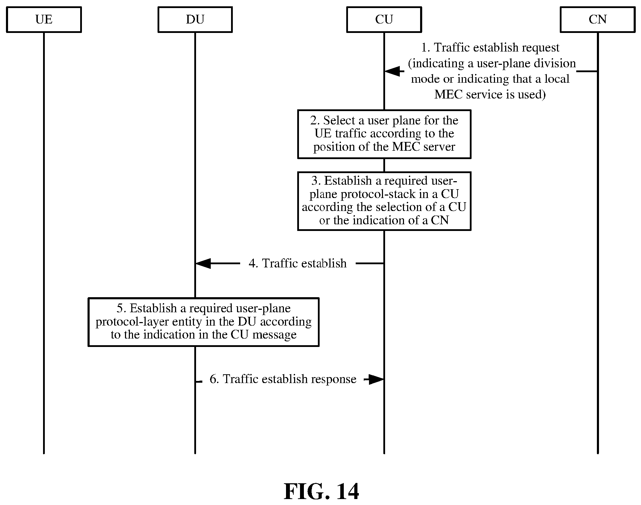

This embodiment provides a method for selecting a user-plane mode. In this embodiment, a CU establishes a user plane in a RAN according to an indication of a core network. As shown in FIG. 14, the process of the method includes the steps described below.

In step 1, the CU receives a traffic establish message from the CN. The message indicates a user-plane division mode in the RAN or indicates that a local MEC service is selected.

In step 2, the CU selects a user-plane division mode for the UE traffic according to the position of the MEC service.

In step 3, the CU firstly establishes, according to the user-plane division mode required by the CN or selected based on the MEC service position, a user-plane protocol-layer entity in the CU after a user-plane division.

In step 4, the CU sends a traffic establish message to the DU. In the message, it is required to establish a user-plane protocol layer in the DU after the user-plane division.

In step 5, the DU establishes, according to the requirement of the CU message, a user-plane protocol-layer entity in the DU after the user-plane division.

In step 6, the DU completes the establishment, and returns a response message to the CU.

It should be understood by those skilled in the art that function modules/units in all or part of the steps of the method, the system and the device disclosed above may be implemented as software, firmware, hardware and appropriate combinations thereof. In the hardware implementation, the division of the functional modules/units mentioned in the above description may not correspond to the division of physical components. For example, one physical component may have several functions, or one function or step may be executed jointly by several physical components. In some embodiments, some or all components are implemented as software executed by processors such as central processing units, digital signal processors or microcontrollers, hardware, or integrated circuits such as application specific integrated circuits. Such software may be distributed on a computer-readable medium, which may include a computer storage medium (or a non-transitory medium) and a communication medium (or a transitory medium). As is known to those skilled in the art, the term, computer storage medium, includes volatile and nonvolatile, removable and non-removable media implemented in any method or technology for storing information (such as computer-readable instructions, data structures, program modules or other data). The computer-storage medium include, but is not limited to, a random access memory (RAM), a read-only memory (ROM), an electrically erasable programmable read-only memory (EEPROM), a flash memory, or other memory technologies, a compact disc read-only memory (CD-ROM), a digital versatile disc (DVD) or other optical disc storage, a magnetic cassette, a magnetic tape, disk storage or other magnetic storage apparatus, or any other medium used to store the desired information and accessible by a computer. In addition, as is known to those skilled in the art, the communication medium generally includes computer-readable instructions, data structures, program modules or other data in modulated data signals such as carriers or other transmission mechanisms, and may include any information delivery medium.

## Claims

1. A method for selecting a user-plane mode, implemented by a centralized unit, comprising:
acquiring (110) one or a plurality of user-plane protocol-layer division modes supported by all cells in a service area of broadcast or multicast traffic, wherein a user-plane protocol-layer division mode is a function split option of a user-plane protocol-layer between the centralized unit and a distributed unit; and
determining (120), according to the one or a plurality of user-plane protocol-layer division modes supported by the all cells, a user-plane protocol-layer division mode of the broadcast or multicast traffic to be deployed between the centralized unit and the distributed unit; and **characterized in that**:
the acquiring (110) comprises: obtaining the one or a plurality of user-plane protocol-layer division modes by querying other network elements storing configuration information; and the determining (120) comprises:
in response to determining that a plurality of user-plane protocol-layer division modes supported by all cells are available, selecting, from the plurality of user-plane protocol-layer division modes, one user-plane protocol-layer division mode with a largest number of user-plane protocol layers deployed on the distributed unit; and determining the selected user-plane protocol-layer division mode to be the user-plane protocol-layer division mode of the broadcast or multicast traffic to be deployed between the centralized unit and the distributed unit.

2. The method of claim 1, wherein the acquiring (110) further comprises:
after receiving a request message for establishing the broadcast or multicast traffic sent by a core network element, acquiring the one or a plurality of user-plane protocol-layer division modes supported by all cells in the service area of the broadcast or multicast traffic; and wherein after determining the user-plane protocol-layer division mode of the broadcast or multicast traffic to be deployed between the centralized unit and the distributed unit, the method further comprises:
establishing, according to the determined user-plane protocol-layer division mode of the broadcast or multicast traffic, a user-plane protocol-layer entity deployed on the centralized unit, and notifying the distributed unit to establish a user-plane protocol-layer entity deployed on the distributed unit.

3. A centralized unit device, comprising a memory, a processor, and a computer program stored in the memory and executable on the processor, wherein, when executing the computer program, the processor performs the method of claim 1 or 2.

## Patentansprüche

1. Verfahren zum Auswählen eines Benutzerebenenmodus, das von einer zentralisierten Einheit implementiert wird, umfassend: Erfassen (110) eines oder einer Vielzahl von Benutzerebenen-Protokollschicht-Teilungsmodi, die von allen Zellen in einem Dienstbereich von Broadcast- oder Multicast-Verkehr unterstützt werden, wobei ein Benutzerebenen-Protokollschicht-Teilungsmodus eine Funktionsteilungsoption einer Benutzerebenen-Protokollschicht zwischen der zentralisierten Einheit und einer verteilten Einheit ist; und
Bestimmen (120), gemäß dem einen oder einer Vielzahl von Teilungsmodi der Benutzerebene-Protokollschicht, die von allen Zellen unterstützt werden, eines Teilungsmodus der Benutzerebene-Protokollschicht des Rundsende- oder Multicast-Verkehrs, der zwischen der zentralisierten Einheit und der verteilten Einheit bereitgestellt werden soll; und **dadurch gekennzeichnet, dass**:
das Erfassen (110) umfasst: Erhalten des einen oder einer Vielzahl von Teilungsmodi der Benutzerebene-Protokollschicht durch Abfragen anderer Netzwerkelemente, die Konfigurationsinformationen speichern; und das Bestimmen (120) umfasst:
als Reaktion auf die Feststellung, dass mehrere von allen Zellen unterstützte Benutzerebenen-Protokollschicht-Teilungsmodi verfügbar sind, Auswählen eines Benutzerebenen-Protokollschicht-Teilungsmodus aus den mehreren Benutzerebenen-Protokollschicht-Teilungsmodi mit der größten Anzahl von Benutzerebenen-Protokollschichten, die auf der verteilten Einheit eingesetzt werden; und Bestimmen des ausgewählten Benutzerebenen-Protokollschicht-Teilungsmodus als den Benutzerebenen-Protokollschicht-Teilungsmodus des zwischen der zentralisierten Einheit und der verteilten Einheit einzusetzenden Rundsende- oder Multicastverkehrs.

2. Verfahren nach Anspruch 1, wobei das Erfassen (110) ferner umfasst:
nach dem Empfang einer von einem Kernnetzelement gesendeten Anforderungsnachricht zum Aufbau des Broadcast- oder Multicast-Verkehrs, Erfassen des einen oder einer Vielzahl von Teilungsmodi der Benutzerebene-Protokollschicht, die von allen Zellen in dem Dienstbereich des Broadcast- oder Multicast-Verkehrs unterstützt werden; und
wobei nach der Bestimmung des Teilungsmodus der Benutzerebene-Protokollschicht des Broadcast- oder Multicast-Verkehrs, der zwischen der zentralisierten Einheit und der verteilten Einheit eingesetzt werden soll, das Verfahren ferner umfasst:
Einrichten einer auf der zentralisierten Einheit eingesetzten Einheit auf der Protokollebene der Benutzerebene entsprechend dem ermittelten Modus der Aufteilung des Broadcast- oder Multicast-Verkehrs auf die Protokollebene der Benutzerebene, und Benachrichtigen der verteilten Einheit, eine auf der verteilten Einheit eingesetzte Einheit auf der Protokollebene der Benutzerebene einzurichten.

3. Zentrale Vorrichtung, umfassend einen Speicher, einen Prozessor und ein Computerprogramm, das im Speicher gespeichert und auf dem Prozessor ausführbar ist, wobei der Prozessor bei der Ausführung des Computerprogramms das Verfahren nach Anspruch 1 oder 2 ausführt.

## Revendications

1. Procédé de sélection d'un mode de plan utilisateur, mis en œuvre par une unité centralisée, comprenant:
l'acquisition (110) d'un ou de plusieurs modes de division de la couche de protocole du plan utilisateur pris en charge par toutes les cellules dans une zone de service du trafic de diffusion ou de multidiffusion, dans laquelle un mode de division de la couche de protocole du plan utilisateur est une option de division fonctionnelle d'une couche de protocole du plan utilisateur entre l'unité centralisée et une unité distribuée; et
déterminer (120), en fonction d'un ou de plusieurs modes de division de la couche de protocole du plan utilisateur pris en charge par toutes les cellules, un mode de division de la couche de protocole du plan utilisateur du trafic de diffusion ou de multidiffusion à déployer entre l'unité centralisée et l'unité distribuée; et **caractérisé en ce que**: l'acquisition (110) comprend: l'obtention d'un ou de plusieurs modes de division de la couche de protocole du plan utilisateur en interrogeant d'autres éléments de réseau stockant des informations de configuration; et la détermination (120) comprend:
après avoir déterminé qu'une pluralité de modes de division de la couche de protocole du plan utilisateur pris en charge par toutes les cellules sont disponibles, sélectionner, parmi la pluralité de modes de division de la couche de protocole du plan utilisateur, un mode de division de la couche de protocole du plan utilisateur comportant le plus grand nombre de couches de protocole du plan utilisateur déployées sur l'unité distribuée; et déterminer que le mode de division de la couche de protocole du plan utilisateur sélectionné est le mode de division de la couche de protocole du plan utilisateur du trafic de diffusion ou de multidiffusion devant être déployé entre l'unité centralisée et l'unité distribuée.

2. Procédé de la revendication 1, dans lequel l'acquisition (110) comprend en outre: après réception d'un message de demande d'établissement du trafic de diffusion ou de multidiffusion envoyé par un élément de réseau central, acquérir un ou plusieurs modes de division de la couche de protocole du plan utilisateur pris en charge par toutes les cellules dans la zone de service du trafic de diffusion ou de multidiffusion; et
dans lequel, après avoir déterminé le mode de division de la couche de protocole du plan utilisateur du trafic de diffusion ou de multidiffusion à déployer entre l'unité centralisée et l'unité distribuée, le procédé comprend en outre:
établir, en fonction du mode de division de la couche de protocole du plan utilisateur déterminé pour le trafic de diffusion ou de multidiffusion, une entité de la couche de protocole du plan utilisateur déployée sur l'unité centralisée, et notifier à l'unité distribuée d'établir une entité de la couche de protocole du plan utilisateur déployée sur l'unité distribuée.

3. Dispositif à unité centralisée, comprenant une mémoire, un processeur et un programme informatique stocké dans la mémoire et exécutable sur le processeur, dans lequel, lors de l'exécution du programme informatique, le processeur met en œuvre le procédé selon la revendication 1 ou 2.
